# EUROPÄISCHE PATENTSCHRIFT

(11) **EP 1 004 475 B1**
(45) Veröffentlichungstag und Bekanntmachung des Hinweises auf die Patenterteilung: **12.11.2003**
(21) Anmeldenummer: 99117509.2
(22) Anmeldetag: 04.09.1999
(51) Int. Cl.: B60R 5/00

(54) **Ladungssicherungsvorrichtung für Personenkraftwagen, wie für Kombinationskraftwagen, Grossraumlimousinen od. dgl.**
Device for securing loads in passenger vehicles,such as estate cars, large volume passenger cars or similar
Dispositif de maintien de chargement pour véhicules automobiles, tels que véhicules du type break,familial à grand volume inérieur ou similaire

(30) Priorität: 24.11.1998 DE 19854240
(43) Veröffentlichungstag der Anmeldung: 31.05.2000
(73) Patentinhaber: PETER BUTZ GmbH & Co Verwaltungs-KG, 40764 Langenfeld (DE)
(72) Erfinder: Sitzler, Wolfgang, 42111 Wuppertal (DE); Ledüc, Peter, 40468 Düsseldorf (DE)
(74) Vertreter: Patentanwälte Ostriga & Sonnet

(56) Entgegenhaltungen:
- EP-A- 0 788 928
- DE-A- 4 222 024
- DE-C- 19 513 215
- DE-U- 7 430 905
- DE-U- 9 311 587
- DE-U- 29 711 198
- US-A- 4 020 986
- US-A- 4 739 637
- US-A- 5 599 054

## Beschreibung

Die Erfindung betrifft eine Ladungssicherungsvorrichtung für Personenkraftwagen, wie für Kombinationskraftwagen, Großraumlimousinen od.dgl. entsprechend dem jeweiligen Oberbegriff der einander nebengeordneten Ansprüche 1, 2 und 3. Eine solche Ladungssicherungsvorrichtung ist durch die DE 195 13 215 C1 bekanntgeworden.

Die bekannte Ladungssicherungsvorrichtung weist ein modulartiges Flächenelement auf, welches an der Rückseite einer von einer aufrechten Position in eine etwa horizontale Position klappbaren Rücksitzlehne befestigt ist. Hierzu weist das eine Aufspannplatte bildende modulare Flächenelement vier Knebelschrauben (flächenelementseitige Gegenrastelemente) auf, welche mit Halterungslöchern (fahrzeugseitige Rastelemente) der Rücksitzlehne derart zusammenwirken, daß die Ladungssicherungsvorrichtung im Bedarfsfall rasch montiert und ebenso rasch wieder demontiert werden kann.

Die von der lösbaren Rastverbindung zwischen den fahrzeugseitigen Rastelementen und den flächenelementseitigen Gegenrastelementen wegweisende Haltefläche des bekannten modulartigen Befestigungselements kann ein Fahrzeug-Ausstattungsteil unterschiedlicher Art, so z.B. ein aufrichtbares Metall-Schutzgitter oder eine Gurt-Verzurrvorrichtung zur Halterung langgestreckten Ladeguts (z.B. Skier), tragen.

Im DE-GM 93 11 587 ist eine Ladungssicherungsvorrichtung mit in dem Laderaum eines Kombinationskraftwagens einendig befestigten, das Ladegut übergreifenden Verzurrgurten beschrieben, deren freie Enden, vergleichbar mit Sicherheitsgurten, patrizenartige Stecker (Gegenrastelemente) tragen, welche mit fahrzeugseitigen matrizen- bzw. hülsenartigen Rastelementen eine lösbare Rastverbindung eingehen.

Durch das DE-GM 297 11 198 ist eine zu einer anderen Gattung zählende Transportbehälter-Einrichtung (Skisack-Einrichtung) bekanntgeworden, deren fahrzeugseitige zargenartige Befestigungsanordnung eine rahmenförmige Anlage-Haltefläche bildet, an welcher statt des Halterahmens eines Skisacks eine Adapterplatte mittels mindestens eines Riegels befestigt werden kann. An der Adapterplatte läßt sich beispielsweise kofferraumseitig oder in der Fahrgastzelle eine Kühlbox oder ein anderer beliebiger Transportbehälter anbringen. Dabei kann die Adapterplatte gemäß dem DE-GM 297 11 198 so beschaffen sein, daß ein und dieselbe Adapterplatte wahlweise und austauschbar eine Vielzahl unterschiedlicher Transportbehälter aufnehmen kann. In einem solchen Falle sind bei der bekannten Adapterplatte die Befestigungsstellen durch voneinander lösbare Befestigungselemente, insbesondere durch Schraubbefestigungselemente oder durch bajonettähnliche Befestigungselemente, gebildet.

Ausgehend von der bekannten Ladungssicherungsvorrichtung gemäß der DE 195 13 215 C1, liegt der Erfindung die Aufgabe zugrunde, die bekannte Ladungssicherungsvorrichtung so weiterzubilden, daß diese nicht nur auf die Verwendung bei Rücksitzlehnen sondern universeller als bisher einsetzbar ist. Gemeinsam mit den Merkmalen des Oberbegriffs des Anspruchs 1 wird diese Aufgabe entsprechend der Erfindung mit den Merkmalen des jeweiligen Kennzeichenteil der Ansprüche 1, 2 oder 3 gelöst.

Entsprechend dem Anspruch 1 ist eine die Anzahl der Gegenrastelemente übersteigende, eine unterschiedliche Anordnung des modulartigen Flächenelements gestattende, Anzahl von fahrzeugseitigen Rastelementen an gleichartigen und/oder an ungleichartigen fahrzeugseitigen Einbaufeldern vorhanden, wobei die fahrzeugseitigen Rastelemente ebenso wie die Gegenrastelemente in einer bestimmten einheitlichen Rasterteilung angeordnet sind.

Das Wesen der Erfindung entsprechend dem Anspruch 1 besteht darin, daß nicht nur beispielsweise an gleichartigen fahrzeugseitigen Einbaufeldern, also nicht nur an den Rückseiten von Rückenlehnen, sondern praktisch an allen geeigneten, untereinander ungleichartigen Stellen des Fahrzeugs fahrzeugseitige Rastelemente vorgesehen sein können. So können beispielsweise in den Fahrzeugboden bzw. in den Laderaumboden fahrzeugseitige Rastelemente eingebaut sein. Alle fahrzeugseitigen Rastelemente sind in einer bestimmten einheitlichen Rasterteilung, beispielsweise auf den Ecken eines Quadrats mit 5 cm Seitenlänge, angeordnet. Auf diese Weise kann ein erfindungsgemäßes modulartiges Flächenelement, welches an seiner Haltefläche Fahrzeug-Ausstattungsteile bzw. Baugruppen unterschiedlichster Art tragen kann, praktisch an beliebigen Stellen des Fahrzeugs lösbar befestigt sein.

Gemäß Anspruch 2 weist die Haltefläche des modulartigen Flächenelements in einer bestimmten einheitlichen Rasterteilung angeordnete Halterastelemente auf, welche mit in derselben bestimmten einheitlichen Rasterteilung angeordneten Gegenhalterastelementen mindestens eines Fahrzeug-Ausstattungsteils eine lösbare Halterastverbindung bilden.

Entsprechend den vorstehenden Erfindungsmerkmalen weisen sowohl die Haltefläche des modulartigen Flächenelements als auch x-beliebige Fahrzeug-Ausstattungsteile miteinander kompatible Halte- und Gegenhalterastelemente mit derselben einheitlichen Rasterteilung auf. Auf diese Weise können mit der Haltefläche des erfindungsgemäßen modulartigen Flächenelements, bezogen entweder auf ein bestimmtes fahrzeugseitiges Einbaufeld oder bezogen auf gleichartige bzw. ungleichartige fahrzeugseitige Einbaufelder, in wechselnder Zuordnung Fahrzeugausstattungsteile unterschiedlicher Art verbunden werden.

Entsprechend dem Anspruch 3 ist eine die Anzahl der Gegenrastelemente übersteigende, eine unterschiedliche Anordnung des modulartigen Flächenelements gestattende, Anzahl von fahrzeugseitigen Rastelementen an gleichartigen und/oder an ungleichartigen fahrzeugseitigen Einbaufeldern vorhanden, wobei die fahrzeugseitigen Rastelemente ebenso wie die Gegenrastelemente in einer bestimmten einheitlichen Rasterteilung angeordnet sind, und daß die Haltefläche des modulartigen Flächenelements in einer bestimmten einheitlichen Rasterteilung angeordnete Halterastelemente aufweist, welche mit in derselben bestimmten einheitlichen Rasterteilung angeordneten Gegenhalterastelementen mindestens eines Fahrzeug-Ausstattungsteils eine lösbare Halterastverbindung bilden.

Die erfindungsgemäße Lösung entsprechend dem Anspruch 3 stellt eine Kombination der Gegenstände der Ansprüche 1 und 2 dar, woraus sich eine besonders vorteilhafte universelle Anwendbarkeit ergibt.

In weiterer Ausgestaltung der Erfindung bilden die fahrzeugseitigen Rastelemente ein durchgehend einheitliches Rasterfeld, welches in vorteilhafter Weise eine wahlfreie versetzte Anordnung des modulartigen Flächenelements um eine Rasterteilung oder um mehrere Rasterteilungen gestattet.

Weiterhin sieht die Erfindung vor, daß fahrzeugseitige Rastelemente in unterschiedlichen fahrzeugseitigen Einbaufeldern angeordnet sind. So bietet sich die Möglichkeit, fahrzeugseitige Rastelemente z.B. an den rückwärtigen Sitzlehnenflächen oder auf dem Fahrzeug- bzw. auf dem Laderaumboden anzuordnen.

Eine andere Erfindungsvariante ist durch eine die Anzahl der Gegenhalterastelemente übersteigende Anzahl von flächenelementseitigen Rastelementen gekennzeichnet. Diese Erfindungsvariante gestattet die Möglichkeit, z.B. mit Gegenrasthalteelementen versehene kleinere Fahrzeug-Ausstattungsteile auf der mit den Halterastelementen versehenen flächenelementseitigen Haltefläche wahlfrei versetzt anzuordnen.

Eine Vereinfachung der Fertigung und gegebenenfalls zusätzliche Variationsmöglichkeiten lassen sich dann erzielen, wenn in weiterer Ausgestaltung der Erfindung die Rasterteilung von fahrzeugseitigen Rastelementen einschließlich korrespondierender flächenelementseitiger Gegenrastelemente sowie von flächenelementseitigen Halterastelementen einschließlich korrespondierender Gegenhalterastelemente des Fahrzeug-Ausstattungsteils dieselbe ist.

Für den Fall, daß das fahrzeugseitige Einbaufeld zur Anbringung des modulartigen Flächenelements nur eine ungünstige Einbaulage darbietet, ist entsprechend der Erfindung eine Anpassungsmöglichkeit dadurch gegeben, daß die Haltefläche des modulartigen Flächenelements bezüglich der flächenelementseitigen Gegenrastelemente lageveränderbar, z.B. neigungsveränderbar od.dgl., ausgebildet ist.

Eine dem praktischen Gebrauch angepaßte bündige Einbaulage ist entsprechend anderen Erfindungsmerkmalen dadurch gegeben, daß die fahrzeugseitigen Rastelemente in der Bodenfläche einer fahrzeugseitigen Aussparung angeordnet sind, die an den Raumbedarf des modulartigen Flächenelements angepaßt ist.

Eine andere Ausgestaltung der Erfindung sieht vor, daß fahrzeugseitige Rastelemente und korrespondierende flächenelementseitige Gegenrastelemente einerseits und flächenelementseitige Halterastelemente und korrespondierende Gegenhalterastelemente des Fahrzeug-Ausstattungsteils andererseits untereinander jeweils unterschiedlich ausgebildet sind. Dies bedeutet, daß z.B. nicht alle Rastelement-Paare patrizen- und matrizenförmig geformt sein müssen. Vielmehr kann es auch genügen, patrizen- und matrizenartige Rastelement-Paare mit anderen Formschlußelement-Paaren, wie z.B. Rippen und Nuten, zu kombinieren. Unter Rastelementen versteht die Erfindung in diesem Zusammenhang auch solche Formschlußelemente, die zwar nicht zug- und druckfest ineinander verriegelbar sind, welche jedoch eine Sicherung gegen Verschiebung und/oder gegen Verdrehung darstellen können.

Eine vorteilhafte erfindungsgemäße Ausführungsform von Rastverbindungen besteht darin, daß die Rastverbindung und/oder die Halterastverbindung je mindestens ein patrizenartiges und je mindestens ein korrespondierendes matrizenartiges Rastelement aufweisen.

Eine Verriegelung der Rastelemente kann erfindungsgemäß so ausgeführt werden, daß die patrizenartigen Rastelemente jeweils mindestens eine Verriegelungsaussparung aufweisen, welche jeweils mit mindestens einem im matrizenartigen Rastelement geführten beweglichen Riegel verriegelnd und entriegelnd zusammenwirkt.

Im einzelnen kann eine Verriegelung zwischen Rastelementen in vorteilhafter Weise so beschaffen sein, daß die Verriegelungsaussparung eines jeden patrizenartigen Rastelements eine dessen Außenumfang begrenzende, nach außen offene Ringnut bildet, welche jeweils von einem translatorisch verschieblichen gabelförmig ausgebildeten Riegel umgriffen ist.

Eine bedienungsfreundliche Betätigung der Verriegelung besteht erfindungsgemäß darin, daß alle matrizenseitig geführten einzelnen Riegel gemeinsam mittels eines Betätigungselements handhabbar sind.

In den Zeichnungen ist die Erfindung anhand bevorzugter Ausführungsbeispiele im wesentlichen schematisch dargestellt, es zeigt,
Fig. 1 eine teilweise räumliche Ansicht einer Fondsitzreihe z.B. eines Kombinationskraftwagens mit zwei modulartigen Flächenelementen, welche an ungleichartigen fahrzeugseitigen Einbaufeldern angebracht sind,
Fig. 2 in Anlehnung an die Darstellung gemäß Fig. 1 lediglich ein an einer rückwärtigen Lehnenfläche einer Fondsitzlehne angebrachtes modulartiges Flächenelement,
Fig. 3 eine Sitzlehnenreihe, welche die alternative Anbringung eines modulartigen Flächenelements verdeutlichen soll,
Fig. 4, 5 und 6 jeweils in Anlehnung an die Darstellung gemäß Fig. 3 unterschiedliche Anwendungsformen,
Fig. 7 eine Draufsicht auf ein etwa plattenförmiges modulartiges Flächenelement,
Fig. 8 einen Schnitt durch das modulartige Flächenelement etwa entsprechend der Schnittlinie VIII-VIII in Fig. 7 und
Fig. 9 die Bodenplatte eines Fahrzeug-Ausstattungsteils mit patrizenartigen Gegenrasthalteelementen in der Seitenansicht.

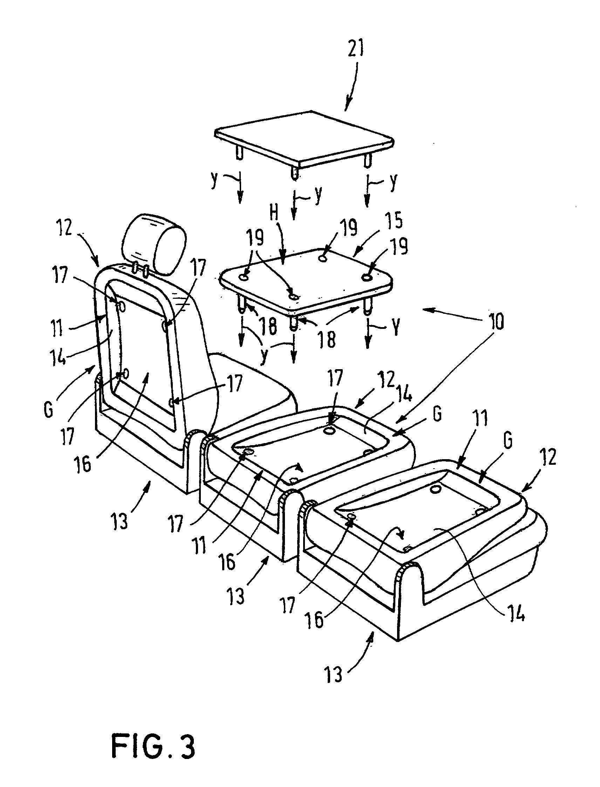

Aus Fig. 3 sind die wesentlichen Bestandteile einer insgesamt mit 10 bezeichneten Ladungssicherungsvorrichtung insgesamt zu ersehen.

Zur Ladungssicherungsvorrichtung 10 gehören im vorliegenden Falle gleichartige fahrzeugseitige Einbaufelder G an den rückwärtigen Lehnenflächen 11 von Fondsitzlehnen 12 dreier Fondsitze 13. Die Fondsitzlehnen 12 weisen an ihren rückwärtigen Lehnenflächen 11 jeweils eine Aussparung 14 auf, in welcher jeweils ein etwa plattenförmiges modulartiges Flächenelement 15 flächenbündig zur rückwärtigen Lehnenfläche 11 aufgenommen werden kann.

In die Bodenfläche 16 einer jeden Aussparung 14 sind vier matrizenartige fahrzeugseitige Rastelemente 17 eingelassen, in welche vier Rastzapfen (patrizenförmige Gegenrastelemente) 18 verriegelt und leicht lösbar eingreifen können. Die Einführrichtung ist mit y gekennzeichnet.

Die den Elementen 17, 18 abgewandte Fläche des modulartigen Flächenelements 15, die Haltefläche, ist mit H bezeichnet. Die Haltefläche H weist vier matrizenartige Halterastelemente 19 auf, in welche zapfenförmige Gegenhalterastelemente 20 verriegelnd eingeführt werden können. Auch in diesem Falle ist die jeweilige Einführrichtung mit y gekennzeichnet. Die Gegenhalterastelemente 20 sind bodenseitig eines insgesamt und schematisch als Bodenplatte dargestellten Fahrzeug-Ausstattungsteils 21 angeordnet.

Die Rasterteilungen der fahrzeugseitigen matrizenförmigen Rastelemente 17, der Gegenrastelemente (Rastzapfen) 18, der Halterastelemente 19 und der Gegenhalterastelemente 20 sind jeweils identisch.

Aus Fig. 3 wird deutlich, daß das modulartige Flächenelement 15 wahlweise in eines der drei sitzlehnenseitigen gleichartigen Einbaufelder G eingesetzt werden kann. Ebensogut ist es möglich, zugleich in jedes der Einbaufelder G je ein modulartiges Flächenelement 15 einzusetzen. Mit jedem modulartigen Flächenelement 15 kann ein x-beliebiges Fahrzeug-Ausstattungsteil 21 kombiniert werden.

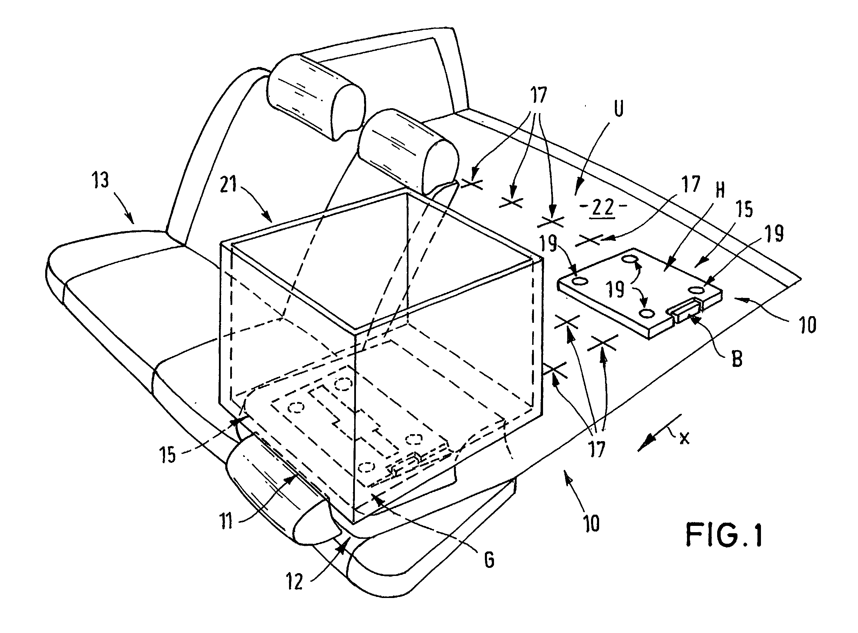

Die in Fig. 3 dargestellten Grundzüge kehren auch bei den Ausführungsformen gemäß den Fig. 1, 2, 4, 5 und 6 wieder.

So ist in Fig. 1 als Fahrzeug-Ausstattungsteil ein Behälter 21 dargestellt, welcher analog zu der in Fig. 3 dargestellten Weise mit einem Einbaufeld G der rückwärtigen Lehnenfläche 11 einer in Fahrtrichtung x nach vorn geklappten Fondsitzlehne 12 verriegelt ist.

Auf dem Laderaumboden 22 des Kombinationskraftwagens sind eine Anzahl von matrizenartigen Rastelementen 17 mit Kreuzen gekennzeichnet. Diese Rastelemente 17 stellen im Vergleich zu denen der rückwärtigen Lehnenfläche 11 ein ungleichartiges fahrzeugseitiges Einbaufeld U dar. In vier der von einem plattenförmigen modulartigen Flächenelement 15 abgedeckten matrizenförmigen Rastelemente 17 sind die nicht gezeigten Gegenrastelemente (Rastzapfen) 18 des modulartigen Flächenelements 15 eingeführt und verriegelt.

Das modulartige Flächenelement 15 weist nach oben offene Halterastelemente 19 zur Aufnahme von nicht gezeigten Gegenhalterastelementen 20 eines Fahrzeug-Ausstattungsteils auf. Die Riegelelemente des modulartigen Flächenelements 15 sind gemeinsam mittels einer Betätigungshandhabe B bedienbar.

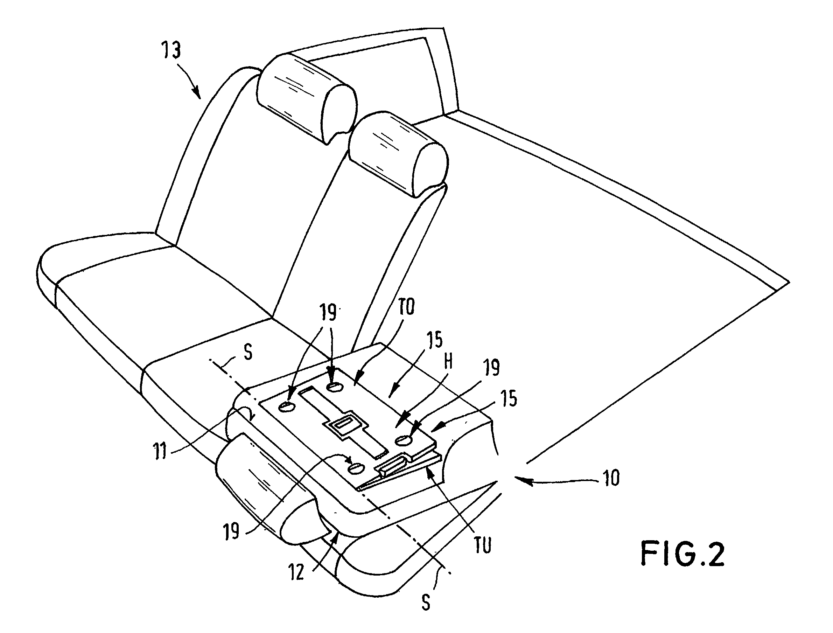

Fig. 2 soll im Unterschied zu Fig. 1 zeigen, daß das auf der rückwärtigen Lehnenfläche 11 lösbar befestigte modulartige Flächenelement 15 ein Oberteil TO und ein Unterteil TU aufweist. Beide Teile TO und TU sind über eine Scharnierachse S aneinander schwenkgelagert, so daß das Oberteil TO zum Ausgleich der Neigung der umgeklappten Fondsitzlehne 12 verschwenkt werden kann, um die Haltefläche H in eine waagerechte Position zu versetzen. Die Teile TO und TU sind mit nicht gezeigten Feststellmitteln in einer gewünschten Neigungslage arretierbar.

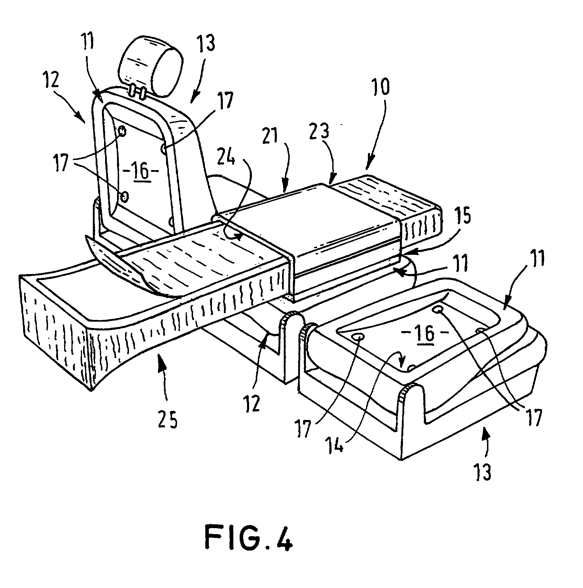

Gemäß Fig. 4 besteht das Fahrzeug-Ausstattungsteil aus einem zwei Durchladeöffnungen 23, 24 aufweisenden Fahrzeug-Ausstattungsteil 21 in Form einer Skisackaufnahme. Der Skisack 25 ist in ausgebreiteter offener Betriebsstellung dargestellt.

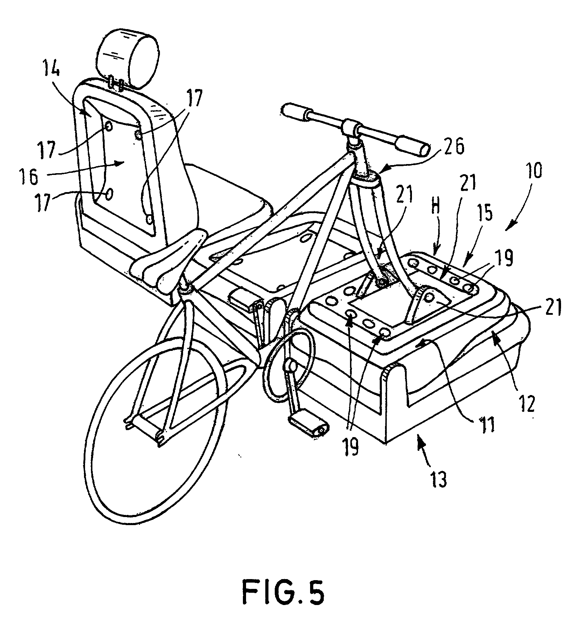

Gemäß Fig. 5 trägt die Haltefläche H des modulartigen Flächenelements 15 als Fahrzeug-Ausstattungsteil 21 je einen Gabelhalter für eine Fahrrad-Vorradgabel 26. Die Gabelhalter 21 besitzen in nicht dargestellter Weise nach unten ragende Gegenhalterastelemente (Zapfen) 20, welche mit den Halterastelementen 19 der Haltefläche H des modulartigen Flächenelements 15 zusammenwirken. Grundsätzlich ist es auch möglich und im Rahmen der Erfindung liegend, die Gabelhalter 21 einstückig mit dem modulartigen Flächenelement 15 auf der Haltefläche H anzuordnen.

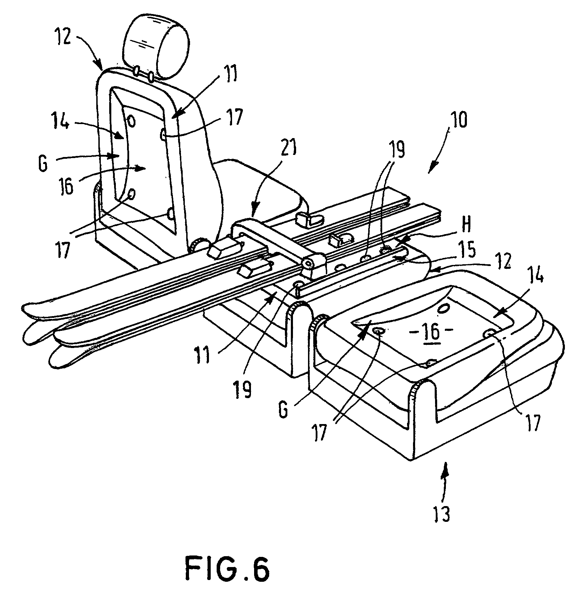

Gemäß Fig. 6 ist das Fahrzeug-Ausstattungsteil 21 von einem klappbaren Ski-Haltebügel gebildet. An jedem Ende weist der Ski-Haltebügel 21 ein nach unten ragendes Gegenhalterastelement (Zapfen) 20 auf, welcher mit je einem matrizenförmigen Halterastelement 19 der Haltefläche H kooperiert.

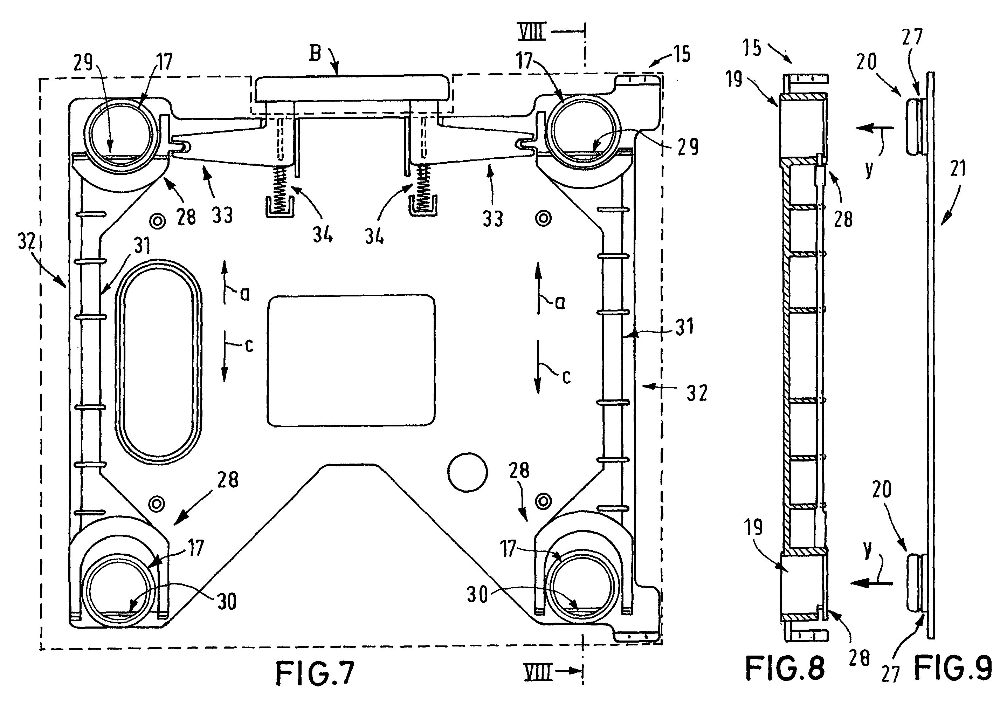

In den Fig. 7-9 ist das Zusammenwirken der Rastelemente in mehr konstruktiver Weise dargestellt.

Das plattenförmige modulartige Flächenelement 15 weist vier matrizenartige Halterastelemente 19 auf, in welche zapfenartige Gegenrastelemente 20 eines Fahrzeug-Ausstattungsteils 21 (hier als Bodenelement lediglich als pars pro toto dargestellt) in Einführrichtung y eingesetzt werden können. Die im wesentlichen rotationssymmetrischen Zapfen 20 weisen jeweils eine sich über den Umfang erstreckende nach außen offene Ringnut 27 auf, welche jeweils von einem gabelförmig ausgebildeten Riegel 28 umgriffen ist. Hierzu bildet jede Gabel 28 eine innenliegende Sperrkante 29 und eine außenliegende Sperrkante 30. Auf diese Weise können die Gabeln 28 in derselben Verriegelungsrichtung a gemeinsam verriegeln und in derselben Entriegelungsrichtung c gemeinsam entriegeln.

Jeweils zwei Gabeln 28 sind über ein Mittelteil 31 zu einem etwa hantelförmigen Gesamtbauteil 32 miteinander verbunden. Beide hantelförmigen Bauteile 32 können mittels der Betätigungshandhabe B über deren Mitnehmerstege 33 bewegungseinheitlich bedient werden. Dabei erfolgt der Entriegelungshub in Richtung c entgegen der Rückstellkraft der beiden Schraubendruckfedern 34.

Die mit den Rastelementen 17 des fahrzeugseitigen Einbaufeldes zusammenwirkenden Gegenrastelemente 18 sind in den Fig. 7 und 8 nicht dargestellt. Es ist indessen vorstellbar, daß die Gegenrastelemente 18 ebenfalls von den als Durchgangsöffnung ausgebildeten Halterastelementen 19 matrizenförmig ausgestaltet und mit zusätzlichen Verriegelungsgabeln 28 versehen sein können. In einem solchen Falle wären die einbaufeldseitigen Rastelemente 17 als nach außen weisende Rastzapfen, ähnlich den Gegenhalterastelementen (Zapfen) 20, gestaltet.

## Patentansprüche

1. Ladungssicherungsvorrichtung (10) für Personenkraftwagen, wie für Kombinationskraftwagen, Großraumlimousinen od.dgl., mit fahrzeugseitigen Rastelementen (17), welche eine lösbare Rastverbindung (17, 18) mit Gegenrastelementen (18) eines modulartigen Flächenelements (15) bilden, das mindestens eine Haltefläche (H) für ein Fahrzeug-Ausstattungsteil (21) aufweist, **dadurch gekennzeichnet, daß** eine die Anzahl der Gegenrastelemente (18) übersteigende, eine unterschiedliche Anordnung des modulartigen Flächenelements (15) gestattende, Anzahl von fahrzeugseitigen Rastelementen (17) an gleichartigen (G) und/oder an ungleichartigen (U) fahrzeugseitigen Einbaufeldern vorhanden ist, wobei die fahrzeugseitigen Rastelemente (17) ebenso wie die Gegenrastelemente (18) in einer bestimmten einheitlichen Rasterteilung angeordnet sind.

2. Ladungssicherungsvorrichtung (10) für Personenkraftwagen, wie für Kombinationskraftwagen, Großraumlimousinen od.dgl., mit fahrzeugseitigen Rastelementen (17), welche eine lösbare Rastverbindung (17, 18) mit Gegenrastelementen (18) eines modulartigen Flächenelements (15) bilden, das mindestens eine Haltefläche (H) für ein Fahrzeug-Ausstattungsteil (21) aufweist, **dadurch gekennzeichnet, daß** die Haltefläche (H) des modulartigen Flächenelements (15) in einer bestimmten einheitlichen Rasterteilung angeordnete Halterastelemente (19) aufweist, welche mit in derselben bestimmten einheitlichen Rasterteilung angeordneten Gegenhalterastelementen (20) mindestens eines Fahrzeug-Ausstattungsteils (21) eine lösbare Halterastverbindung (19, 20) bilden.

3. Ladungssicherungsvorrichtung (10) für Personenkraftwagen, wie für Kombinationskraftwagen, Großraumlimousinen od.dgl., mit fahrzeugseitigen Rastelementen (17), welche eine lösbare Rastverbindung (17, 18) mit Gegenrastelementen (18) eines modulartigen Flächenelements (15) bilden, das mindestens eine Haltefläche (H) für ein Fahrzeug-Ausstattungsteil (21) aufweist, **dadurch gekennzeichnet, daß** eine die Anzahl der Gegenrastelemente (18) übersteigende, eine unterschiedliche Anordnung des modulartigen Flächenelements (15) gestattende, Anzahl von fahrzeugseitigen Rastelementen (17) an gleichartigen (G) und/oder ungleichartigen (U) fahrzeugseitigen Einbaufeldern vorhanden ist, wobei die fahrzeugseitigen Rastelemente (17) ebenso wie die Gegenrastelemente (18) in einer bestimmten einheitlichen Rasterteilung angeordnet sind, und daß die Haltefläche (H) des modulartigen Flächenelements (15) in einer bestimmten einheitlichen Rasterteilung angeordnete Halterastelemente (19) aufweist, welche mit in derselben bestimmten einheitlichen Rasterteilung angeordneten Gegenhalterastelementen (20) mindestens eines Fahrzeug-Ausstattungsteils (21) eine lösbare Halterastverbindung (19, 20) bilden.

4. Ladungssicherungsvorrichtung nach einem der Ansprüche 1 bis 3, **dadurch gekennzeichnet, daß** die fahrzeugseitigen Rastelemente (17) mindestens ein durchgehend einheitliches Rasterfeld (G, U) bilden.

5. Ladungssicherungsvorrichtung nach einem der Ansprüche 1 bis 4, **dadurch gekennzeichnet, daß** fahrzeugseitige Rastelemente (17) an unterschiedlichen fahrzeugseitigen Einbaufeldern (G, U) angeordnet sind.

6. Ladungssicherungsvorrichtung nach einem der Ansprüche 1 bis 5, **gekennzeichnet durch** eine die Anzahl der Gegenhalterastelemente (20) übersteigende Anzahl von flächenelementseitigen Halterastelementen (19).

7. Ladungssicherungsvorrichtung nach einem der Ansprüche 1 bis 6, **dadurch gekennzeichnet, daß** die Rasterteilung von fahrzeugseitigen Rastelementen (17) einschließlich korrespondierender flächenelementseitiger Gegenrastelemente (18) sowie von flächenelementseitigen Halterastelementen (19) einschließlich korrespondierender Gegenhalterastelemente (20) des Fahrzeug-Ausstattungsteils (21) dieselbe ist.

8. Ladungssicherungsvorrichtung nach einem der Ansprüche 1 bis 7, **dadurch gekennzeichnet, daß** die Haltefläche (H) des modulartigen Flächenelements (15) bezüglich der flächenelementseitigen Gegenrastelemente (18) lageveränderbar, z.B. neigungsveränderbar od.dgl., ausgebildet ist.

9. Ladungssicherungsvorrichtung nach einem der Ansprüche 1 bis 8, **dadurch gekennzeichnet, daß** die fahrzeugseitigen Rastelemente (17) in der Bodenfläche (16) einer fahrzeugseitigen Aussparung (14) angeordnet sind, die an den Raumbedarf des modulartigen Flächenelements (15) angepaßt ist.

10. Ladungssicherungsvorrichtung nach einem der Ansprüche 1 bis 9, **dadurch gekennzeichnet, daß** fahrzeugseitige Rastelemente (17) und korrespondierende flächenelementseitige Gegenrastelemente (18) einerseits und flächenelementseitige Halterastelemente (19) und korrespondierende Gegenhalterastelemente (20) des Fahrzeug-Ausstattungsteils (21) andererseits untereinander jeweils unterschiedlich ausgebildet sind.

11. Ladungssicherungsvorrichtung nach einem der Ansprüche 1 bis 10, **dadurch gekennzeichnet, daß** die Rastverbindung (17, 18) und/oder die Halterastverbindung (19, 20) je mindestens ein patrizenartiges (z.B. 20) und je mindestens ein korrespondierendes matrizenartiges (z.B. 19) Rastelement aufweisen.

12. Ladungssicherungsvorrichtung nach Anspruch 11, **dadurch gekennzeichnet, daß** die patrizenartigen Rastelemente (20) jeweils mindestens eine Verriegelungsaussparung (27) aufweisen, welche jeweils mit mindestens einem im matrizenartigen Rastelement (19) geführten beweglichen Riegel (28) verriegelnd und entriegelnd zusammenwirkt.

13. Ladungssicherungsvorrichtung nach Anspruch 12, **dadurch gekennzeichnet, daß** die Verriegelungsaussparung eines jeden patrizenartigen Rastelements (20) eine dessen Außenumfang begrenzende, nach außen offene Ringnut (27) bildet, welche jeweils von einem translatorisch verschieblichen gabelförmig ausgebildeten Riegel (28) umgriffen ist.

14. Ladungssicherungsvorrichtung nach Anspruch 12 oder nach Anspruch 13, **dadurch gekennzeichnet, daß** alle matrizenseitig geführten einzelnen Riegel (28) gemeinsam mittels eines Betätigungselements (B) handhabbar sind.

15. Ladungssicherungsvorrichtung nach einem der Ansprüche 1 bis 14, **dadurch gekennzeichnet, daß** das Fahrzeug-Ausstattungsteil (21) fest an der Haltefläche (H) des modulartigen Flächenelements (15) angeordnet oder einstückig an die Haltefläche (H) des modulartigen Flächenelements (15) angeschlossen ist.

## Claims

1. Load-securing device (10) for passenger cars, such as estate cars, large-capacity saloons or the like, the said device having latching elements (17) on the vehicle which form a releasable latching connection (17, 18) with counter-latching elements (18) on a module-like planar element (15) which has at least one mounting surface (H) for a vehicle fitment (21), **characterised in that** a number of latching elements (17) on the vehicle that exceeds the number of counter-latching elements (18) and permits a different arrangement of the module-like planar element (15) is present at homogeneous (G) and/or heterogeneous (U) installation areas on the vehicle, the latching elements (17) on the vehicle being arranged, in the same way as the counter-latching elements (18), in a specific, uniform grid spacing.

2. Load-securing device (10) for passenger cars, such as estate cars, large-capacity saloons or the like, the said device having latching elements (17) on the vehicle which form a releasable latching connection (17, 18) with counter-latching elements (18) on a module-like planar element (15) which has at least one mounting surface (H) for a vehicle fitment (21), **characterised in that** the mounting surface (H) of the module-like planar element (15) has mounting latching elements (19) which are arranged in a specific, uniform grid spacing and which form, with counter-mounting latching elements (20) on at least one vehicle fitment (21) which are arranged in the same specific, uniform grid spacing, a releasable mounting latching connection (19, 20).

3. Load-securing device (10) for passenger cars, such as estate cars, large-capacity saloons or the like, the said device having latching elements (17) on the vehicle which form a releasable latching connection (17, 18) with counter-latching elements (18) on a module-like planar element (15) which has at least one mounting surface (H) for a vehicle fitment (21), **characterised in that** a number of latching elements (17) on the vehicle that exceeds the number of counter-latching elements (18) and permits a different arrangement of the module-like planar element (15) is present at homogeneous (G) and/or heterogeneous (U) installation areas on the vehicle, the latching elements (17) on the vehicle being arranged, in the same way as the counter-latching elements (18), in a specific, uniform grid spacing, and that the mounting surface (H) of the module-like planar element (15) has mounting latching elements (19) which are arranged in a specific, uniform grid spacing and which form, with counter-mounting latching elements (20) on at least one vehicle fitment (21) which are arranged in the same specific, uniform grid spacing, a releasable mounting latching connection (19, 20).

4. Load-securing device according to one of claims 1 to 3, **characterised in that** the latching elements (17) on the vehicle form at least one continuously uniform grid area (G, U).

5. Load-securing device according to one of claims 1 to 4, **characterised in that** latching elements (17) on the vehicle are arranged at different installation areas (G, U) on the vehicle.

6. Load-securing device according to one of claims 1 to 5, **characterised by** a number of mounting latching elements (19) on the planar element that exceeds the number of counter-mounting latching elements (20).

7. Load-securing device according to one of claims 1 to 6, **characterised in that** the grid spacing of latching elements (17) on the vehicle, including corresponding counter-latching elements (18) on the planar element, and also of mounting latching elements (19) on the said planar element, including corresponding counter-mounting latching elements (20) on the vehicle fitment (21), is the same.

8. Load-securing device according to one of claims 1 to 7, **characterised in that** the mounting surface (H) of the module-like planar element (15) is constructed so as to be variable in location, for example variable in inclination or the like, with respect to the counter-latching elements (18) on the planar element.

9. Load-securing device according to one of claims 1 to 8, **characterised in that** the latching elements (17) on the vehicle are arranged in the bottom surface (16) of a recess (14) in the vehicle which is adapted to the space required by the module-like planar element (15).

10. Load-securing device according to one of claims 1 to 9, **characterised in that** latching elements (17) on the vehicle and corresponding counter-latching elements (18) on the planar element, on the one hand, and mounting latching elements (19) on the planar element and corresponding counter-mounting latching elements (20) on the vehicle fitment (21), on the other, are of different construction from one another in each case.

11. Load-securing device according to one of claims 1 to 10, **characterised in that** the latching connection (17, 18) and/or the mounting latching connection (19, 20) each have at least one patrix-like latching element (for example 20) and at least one corresponding matrix-like latching element (for example 19).

12. Load-securing device according to claim 11, **characterised in that** the patrix-like latching elements (20) each have at least one locking recess (27) which interacts, in each case, in a locking and unlocking manner with at least one movable locking bolt (28) which is guided in the matrix-like latching element (19).

13. Load-securing device according to claim 12, **characterised in that** the locking recess in each patrix-like latching element (20) forms an outwardly open annular groove (27) which delimits the outer periphery of the said latching element and has, engaging around it in each case, a locking bolt (28) of fork-shaped construction which is displaceable in a translatory manner.

14. Load-securing device according to claim 12 or according to claim 13, **characterised in that** all the individual locking bolts (28) which are guided in the matrix can be manipulated jointly by means of one actuating element (B).

15. Load-securing device according to one of claims 1 to 14, **characterised in that** the vehicle fitment (21) is arranged fixedly on the mounting surface (H) of the module-like planar element (15) or is connected in one piece to the said mounting surface (H) of the module-like planar element (15).

## Revendications

1. Dispositif de maintien de chargement (10) pour des véhicules de transport de personnes, tel que pour des véhicules commerciaux, des limousines de grande capacité ou analogues, avec des éléments d'encliquetage (17) situés côté véhicule, qui forment une liaison à encliquetage (17, 18) désolidarisable avec des éléments d'encliquetage conjugués (18) venant d'un élément de surface (15) modulaire, présentant au moins une surface de maintien (H) pour une partie d'équipement de véhicule (21), **caractérisé en ce qu'**un nombre d'éléments d'encliquetage (17) situés côté véhicule, supérieur au nombre des éléments d'encliquetage conjugués (18), permettant un agencement différent de l'élément de surface (15) modulaire, est prévu sur des zones de montage, situées côté véhicule, du même type (G) et/ou de type différent (U), les éléments d'encliquetage (17) situés côté véhicule étant disposés, tout comme les éléments d'encliquetage conjugués (18), en un réseau gradué unitaire déterminé.

2. Dispositif de maintien de chargement (10) pour des véhicules de transport de personnes, tel que pour des véhicules commerciaux, des limousines de grande capacité ou analogues, avec des éléments d'encliquetage (17) situés côté véhicule, qui forment une liaison à encliquetage (17, 18) désolidarisable avec des éléments d'encliquetage conjugués (18) venant d'un élément de surface (15) modulaire, présentant au moins une surface de maintien (H) pour une partie d'équipement de véhicule (21), **caractérisé en ce que** la surface de maintien (H) de l'élément de surface (15) modulaire présente des éléments de maintien avec encliquetage (19) disposés selon un réseau gradué unitaire déterminé, qui forment, avec des éléments de maintien à encliquetage conjugués (20), disposés selon le même réseau gradué unitaire déterminé, d'au moins une partie d'équipement de véhicule (21), une liaison de maintien à encliquetage (19, 20) désolidarisable.

3. Dispositif de maintien de chargement (10) pour des véhicules de transport de personnes, tel que pour des véhicules commerciaux, des limousines de grande capacité ou analogues, avec des éléments d'encliquetage (17) situés côté véhicule, qui forment une liaison à encliquetage (17, 18) désolidarisable avec des éléments d'encliquetage conjugués (18) venant d'un élément de surface (15) modulaire, présentant au moins une surface de maintien (H) pour une partie d'équipement de véhicule (21), **caractérisé en ce qu'**un nombre d'éléments d'encliquetage (17) situés côté véhicule, supérieur au nombre des éléments d'encliquetage conjugués (18), permettant un agencement différent de l'élément de surface (15) modulaire, est prévu sur des zones de montage, situées côté véhicule, du même type (G) et/ou de type différent (U), les éléments d'encliquetage (17), situés côté véhicule, étant disposés, tout comme les éléments d'encliquetage conjugués (18), en un réseau gradué unitaire déterminé, et **en ce que** la surface de maintien (H) de l'élément de surface (15) modulaire présente des éléments de maintien à encliquetage (19), disposés selon un réseau gradué unitaire déterminé, qui forment, avec des éléments de maintien à encliquetage conjugués (20), disposés dans le même réseau gradué unitaire déterminé d'au moins une partie d'équipement de véhicule (21), une liaison de maintien à encliquetage (19, 20) désolidarisable.

4. Dispositif de maintien de chargement selon l'une des revendications 1 à 3, **caractérisé en ce que** les éléments d'encliquetage (17), situés côté véhicule, forment au moins un champ gradué (G ,U) unitaire continu.

5. Dispositif de maintien de chargement selon l'une des revendications 1 à 4, **caractérisé en ce que** des éléments d'encliquetage des éléments (17), situés côté véhicule, sont disposés sur des zones de montage (G, U) différentes, situées côté véhicule.

6. Dispositif de maintien de chargement selon l'une des revendications 1 à 5, **caractérisé par** un nombre d'éléments de maintien à encliquetage (19), situés côté éléments de surface, supérieur au nombre des éléments de maintien d'encliquetage conjugués (20).

7. Dispositif de maintien de chargement selon l'une des revendications 1 à 6, **caractérisé en ce que** le réseau gradué formé d'éléments d'encliquetage (17) situés côté véhicule, y compris des éléments d'encliquetage conjugués (18) correspondants, situés côté éléments de surface, ainsi que formé d'éléments de maintien à encliquetage (19) situés côté éléments de surface, y compris des éléments de maintien à encliquetage conjuguées (20) correspondants de la partie d'équipement de véhicule (21), est le même.

8. Dispositif de maintien de chargement selon l'une des revendications 1 à 7 **caractérisé en ce que** la surface de maintien (H) de l'élément de surface (15) modulaire est formé, relativement aux éléments d'encliquetage conjugués (18) situés côté élément de surface, de façon à permettre la modification de leur position, par exemple la modification de leur inclinaison ou analogue.

9. Dispositif de maintien de chargement selon l'une des revendications 1 à 8, **caractérisé en ce que** les éléments d'encliquetage (17) situés côté véhicule sont disposés dans la sur-face de fond (16) d'un évidement (14) situé côté véhicule, adaptée à la demande d'espace de l'élément de surface (15) modulaire.

10. Dispositif de maintien de chargement selon l'une des revendications 1 à 9, **caractérisé en ce que** des éléments d'encliquetage (17), situés côté véhicule, et des éléments d'encliquetage conjugués (18) correspondants, situés côté éléments de surface, d'une part, et des éléments de maintien à encliquetage (19), situés côté éléments de surface, et des éléments de maintien à encliquetage conjugués (20) correspondants de la partie d'équipement du véhicule (21), d'autre part, sont réalisés en étant chacun différents les uns des autres.

11. Dispositif de maintien de chargement selon l'une des revendications 1 à 10, **caractérisé en ce que** la liaison à encliquetage (17, 18) et/ou la liaison de maintien à encliquetage (19, 20) présente(nt) chacune au mois un élément d'encliquetage de type mâle (par exemple 20) et chacune au moins un élément d'encliquetage (par exemple 19) de type femelle, correspondant.

12. Dispositif de maintien de chargement selon la revendication 11, **caractérisé en ce que** les éléments d'encliquetage (20) de type mâle présentent chacun au moins un évidement de verrouillage (27), qui coopère, avec effet de verrouillage et de déverrouillage, chaque fois avec au moins un verrou (28) à mobilité guidée, dans un élément d'encliquetage (19) de type femelle.

13. Dispositif de maintien de chargement selon la revendication 12, **caractérisé en ce que** l'évidement de verrouillage de chaque élément d'encliquetage (20) de type mâle forme une gorge annulaire (27) ouverte sur l'extérieur, délimitant sa périphérie extérieure et entourée chaque fois par un verrou (28) conformé en fourche, mobile en translation.

14. Dispositif de maintien de chargement selon la revendication 12 ou la revendication 13, **caractérisé en ce que** tous les verrous (28) guidés, côté partie femelle, sont manipulables conjointement à l'aide d'un élément d'actionnement (B).

15. Dispositif de maintien de chargement selon l'une des revendications 1 à 14, **caractérisé en ce que** la partie d'équipement de véhicule (21) est disposée à demeure sur la face de maintien (H) de l'élément de surface (15) modulaire, ou est raccordée d'une seule pièce à la face de maintien (H) de l'élément de surface (15) modulaire.
